(19) **Europäisches Patentamt / European Patent Office / Office européen des brevets**

(11) **EP 2 256 734 B1**

(12) **EUROPEAN PATENT SPECIFICATION**

(45) Date of publication and mention
of the grant of the patent:
**29.08.2012 Bulletin 2012/35**

(51) Int Cl.:
*G11B 27/00* (2006.01)  *G11B 20/10* (2006.01)
*G10L 19/14* (2006.01)

(21) Application number: **10164248.6**

(22) Date of filing: **28.05.2010**

(54) **Digital data processing apparatus for direct access to audio frames with different sizes**

Digitale Datenverarbeitungsvorrichtung zum direkten Zugriff auf Audiorahmen unterschiedlicher Grösse

Appareil de traitement des données numériques pour accès direct au trames audio de tailles différentes

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 JP 2009131358**

(43) Date of publication of application:
**01.12.2010 Bulletin 2010/48**

(73) Proprietors:
 • **Sanyo Electric Co., Ltd.**
  **Osaka 570-8677 (JP)**
 • **Sanyo Semiconductor Co., Ltd.**
  **Ora-gun**
  **Gunma 370-0596 (JP)**

(72) Inventor: **Masuda, Tatsuya**
  **Osaka 570-8677 (JP)**

(74) Representative: **Giovannini, Francesca et al**
  **Osha Liang**
  **32, avenue de l'Opéra**
  **75002 Paris (FR)**

(56) References cited:
  **EP-A2- 0 700 181**  **WO-A1-02/086894**
  **US-A1- 2002 196 714**  **US-A1- 2004 138 895**
  **US-A1- 2005 111 493**

 • **BOUVIGNE G: "MPEG Audio Layer I/II/III frame header" INTERNET CITATION 17 February 2001 (2001-02-17), XP002275053 Retrieved from the Internet: URL:http://www.mp3-tech.org/ programmer/fra me_header.html [retrieved on 2004-03-25]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a digital data processing apparatus.

Description of the Related Art

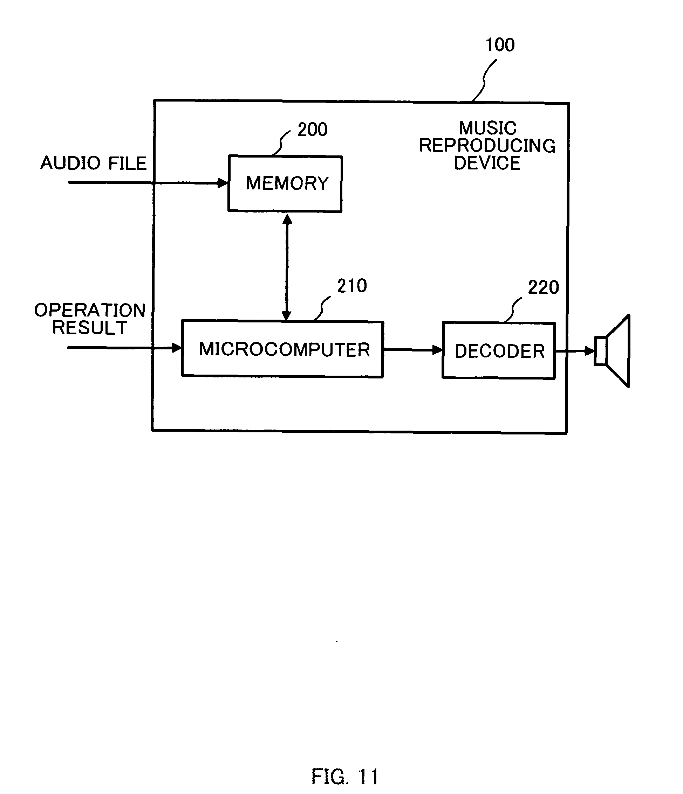

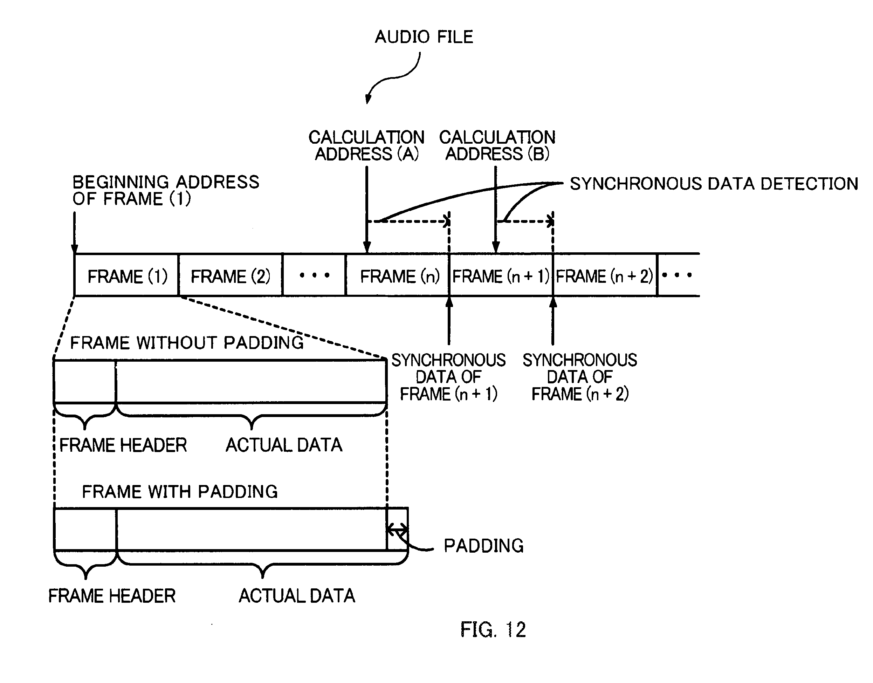

Some music reproducing devices read and reproduce an audio file in the MP3 (MPEG Audio Layer-3) format or the like stored in a memory. Fig. 11 is an example of a music reproducing device 100. The music reproducing device 100 includes a memory 200, a microcomputer 210, and a decoder 220. In the memory 200, the audio file is stored. A general audio file is made up of a plurality of frames, as shown in Fig. 12, for example. A frame includes a frame header, including synchronous data indicating the beginning of the frame, information such as a frame data size, and the like, and actual data obtained by encoding audio data. Padding may be added to the actual data when the audio file is reproduced at a fixed bit rate, for example. The microcomputer 210 reads the audio file based on an operation result of an operation unit (not shown), to be output to the decoder 220. The decoder 220 decodes the audio file in the MP3 format which is encoded so as to reproduce the audio file.

When the music reproducing device 100 reproduces an audio file, the microcomputer 210 sequentially reads data from a frame (1) of the audio file, to be output to the decoder 220. However, in a case where the music reproducing device 100 fast-forwards the audio file or the like, the microcomputer 210 needs to skip a plurality of frames and to select a desired frame. Specifically, if the microcomputer 210 selects a frame (n + 1), for example, the microcomputer 210 needs to access a storage region of the memory 200, in which the synchronous data of the frame (n + 1) is stored, based on the operation result of fast-forwarding or the like.

To select a desired frame, there is a method of storing an address of a memory, in which synchronous data of each frame in the audio file is stored, in a memory or the like separately from the audio file, for example. In such a case, the microcomputer or the like can select the desired frame by using information of the address of the synchronous data of each frame (hereinafter, referred to as a beginning address) (Japanese Patent Laid-Open Publication No.2002-41095, for example).

Even if the information on the beginning address is not stored in the memory or the like, the microcomputer 210 can calculate the beginning address of the frame (n + 1) based on the data size of the frame in a case where there is no padding in it, the number n of frames, and the like. Specifically, as shown in Fig. 12, the microcomputer 210 adds a product of the data size of the frame in a case where there is no padding in it and the number n of the frames to the beginning address of the frame (1), for example. Then, the microcomputer 210 executes detection processing of the synchronous data, for example, based on a position (A) of the calculated calculation address. As a result, the microcomputer 210 can acquire the beginning address of the frame (N + 1).

However, in the case of storing the information on the beginning address of each frame in the memory or the like as mentioned above, for example, if the number of frames making up the audio file is increased, the information of the beginning address is also increased. Therefore, in this case, the storage region of the memory for storing the information on the beginning address needs to be enlarged.

In the case where processing for detecting the synchronous data is executed based on the calculated calculation address, if there are many frames having padding added thereto in the frames from the frame (1) to a frame (n), the beginning address of the frame (n + 1) cannot be acquired precisely in some cases. As mentioned above, if the calculation address is at the position (A), for example, the beginning address of the frame (n + 1) can be acquired by detecting the synchronous data. However, if there are many frames having padding added thereto, and the calculation address is at a position (B), for example, a wrong address is acquired as the beginning address of the frame (n + 2) . Therefore, in the case where the synchronous data is detected based on the calculation address, such a problem may occurs that a desired beginning address cannot be calculated precisely.

In another example, disclosed within International Patent Application No. PCT/IB02/01316 (International Patent Application Publication No. WO 02/086894) . Trick play is applied to an MP3 data stream that comprises headers and signal data interspersed within each other. Each header specifies a distance to a subsequent header, each header corresponding to a frame of signal data, the header being associated with a pointer that points a starting point of the signal data for that frame relative to the header. Before applying trick play the original data stream is converted into an intermediate data stream of the same type as the original stream. During conversion the starting points of the frames are moved to predetermined positions relative the associate headers and the headers are modified to create additional space between the headers so that the frames fit between headers.

## SUMMARY OF THE INVENTION

A digital data processing apparatus according to an aspect of the present invention, comprises: an encoding unit configured to encode inputted digital audio data to generate encoded data with a predetermined bit rate, as well as to allow the encoded data to be sequentially stored in a memory, the encoded data consisting of frames of first data size and second data size that is greater than the first data size; a frame number calculation unit configured to calculate at least either one of the number of frames of the first data size and the number of frames of the second data size, out of the frames, the number of which is n, stored in the memory; and an address calculation unit configured to calculate a second address of the memory based on a first address of the memory, the first and second data sizes, a calculation result of the frame number calculation unit, and the number n of the frames, the second address having beginning data stored therein of a frame that is stored in the memory subsequently to the n frames, the first address having beginning data stored therein indicating beginning of a frame that is stored in the memory the earliest in time among the n frames.

Other features of the present invention will become apparent from descriptions of this specification and of the accompanying drawings.

## BRIEF DESCRIPTION OF THE DRAWINGS

For more thorough understanding of the present invention and advantages thereof, the following description should be read in conjunction with the accompanying drawings, in which:

Fig. 1 is a diagram illustrating a configuration of a music reproducing device according to an embodiment of the present invention;
Fig. 2 is a diagram for describing a configuration of an audio file;
Fig. 3 is a diagram for describing a frame that is generated by an MP3 encoder 50;
Fig. 4 is a diagram illustrating a relationship between a generated frame and presence/absence of padding;
Fig. 5 is a diagram illustrating a functional block of a CPU 52a;
Fig. 6 is a diagram illustrating a functional block of a frame number calculation unit 64;
Fig. 7 is a diagram illustrating an example of an audio file stored in an SDRAM 42;

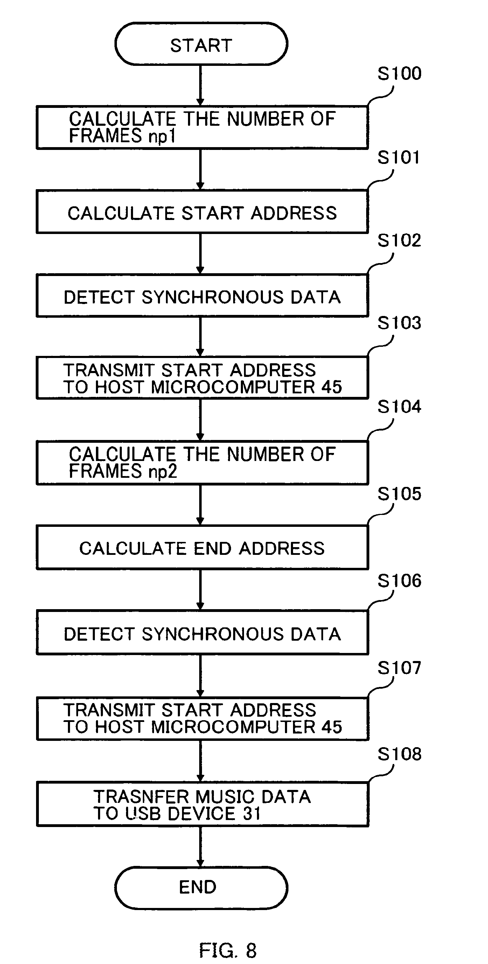

Fig. 8 is a flowchart illustrating an example of an operation when a music reproducing device 10, which employs the CPU 52a, transfers music stored in an SDRAM 42 to a USB device 31;
Fig. 9 is a diagram illustrating a functional block of a CPU 52b;

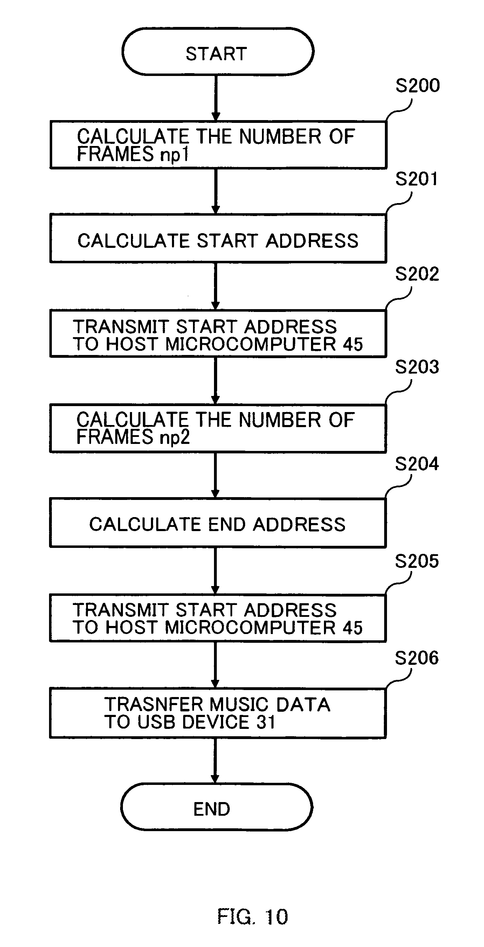

Fig. 10 is a flowchart illustrating an example of an operation when a music reproducing device 10, which employs the CPU 52b, transfers music stored in an SDRAM 42 to a USB device 31;
Fig. 11 is a diagram illustrating a configuration of a music reproducing device; and
Fig. 12 is a diagram for explaining a configuration of an audio file.

## DETAILED DESCRIPTION OF THE INVENTION

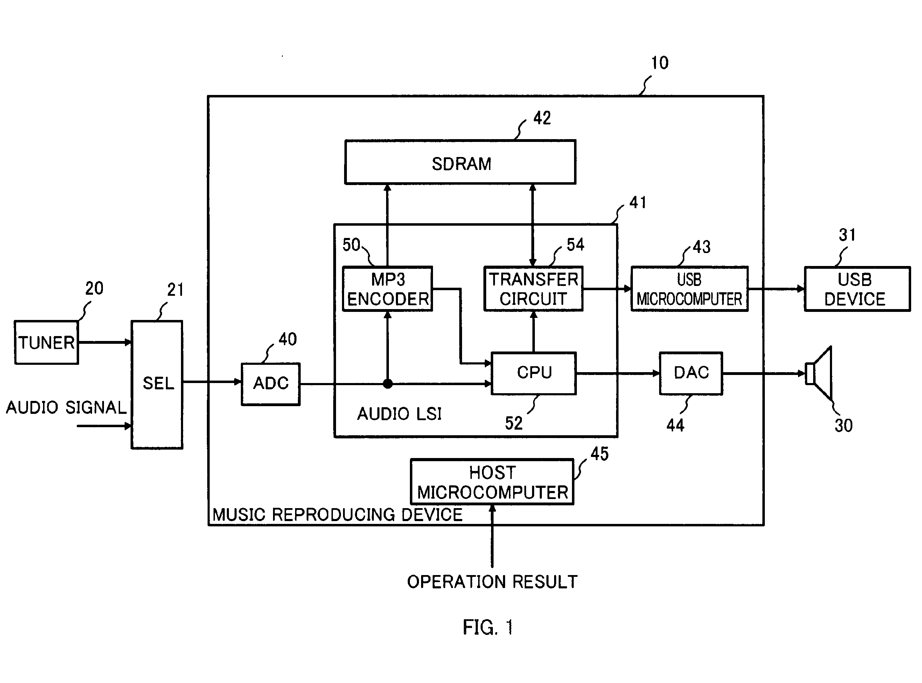

At least the following details will become apparent from descriptions of this specification and of the accompanying drawings. Fig. 1 is a diagram illustrating a configuration of a music reproducing device according to an embodiment of the present invention.

A music reproducing device 10 is mounted on a car stereo system, for example, and includes an ADC (Analog Digital converter) 40, an audio LSI 41, a SDRAM (Synchronous Dynamic Random Access Memory) 42, a USB (Universal Serial Bus) microcomputer 43, a DAC (Digital Analog converter) 44, and a host microcomputer 45. The music reproducing device 10 reproduces an analog signal of inputted sound by a speaker 30. The music reproducing device 10 also converts the inputted analog signal into digital data, to be encoded, and stores the encoded data in the USB device 31.

An analog signal outputted from a tuner 20 for radio broadcasting and an analog signal outputted from a portable music player (not shown), for example, are inputted to a selector 21.

An analog signal selected at the selector 21 is inputted to the ADC 40. In addition, the ADC 40 converts the inputted analog signal into digital PCM (Pulse Code Modulation) data. It is assumed that a sampling frequency when the ADC 40 according to an embodiment of the present invention converts the analog signal into PCM data is 44.1 kHz, for example, and a bit width is 16 bits, for example. The sampling frequency of the ADC 40 and the bit width of the PCM data are set by a host microcomputer 45, for example. Also, tuning of the tuner 20, selection of an input source and the like are executed by a system microcomputer (not shown) of the car stereo system.

The audio LSI 41 (digital data processing apparatus) performs various types of processing for an audio signal inputted as the PCM data, to be outputted to the DAC 44. Specifically, the audio LSI 41 performs, for the audio signal, such processing as to accentuate lower audio frequencies of sound, for example, based on an instruction from the host microcomputer 45. The audio LSI 41 also detects whether the sound is so-called music or not, based on a frequency of the inputted audio signal or the like. Moreover, the audio LSI 41 encodes the PCM data into the MP3 format, to be stored as MP3 data in the SDRAM 42. Also, the audio LSI 41 outputs the MP3 data stored in the SDRAM 42 to the USB device 31 through the USB microcomputer 43, under control of the host microcomputer 45. The audio LSI 41 will be described later in detail.

The SDRAM 42 is provided with a storage region for storing the MP3 data.

The USB microcomputer 43 transfers the MP3 data outputted from the audio LSI 41 to the USB device 31 connected through a USB connector or the like based on an instruction from the host microcomputer 45. The USB device 31 includes a memory, for example, and is a portable music player or the like capable of reproducing the MP3 data. Therefore, for example, music in radio received by the tuner 20 or the like can be stored in the USB device 31 as digital data by a user, which will be described later in detail.

The DAC 44 converts the digital PCM data outputted from the audio LSI 41 into an analog signal and reproduces the converted data by the speaker 30.

The host microcomputer 45 controls the music reproducing device 10 based on the operation result of an operation unit (not shown). Specifically, the host microcomputer 45 sets the ADC 40 sampling frequency, a bit rate of the MP3 data in the audio LSI 41 and the like, and also controls start, stop and the like of circuits in the music reproducing device 10.

A configuration of the audio LSI 41 will be described in detail. The audio LSI 41 includes an MP3 encoder 50, a CPU 52, and a transfer circuit 54.

The MP3 encoder 50 (encoding unit) encodes the PCM data outputted from the ADC 40 and generates MP3 data, to be stored in the SDRAM 42. The MP3 encoder 50 generates the MP3 data with a bit rate or the like that are based on information set in a register (not shown) inside thereof. The above information of the register in the MP3 encoder 50 is set by the host microcomputer 45. The MP3 encoder 50 according to an embodiment of the present invention converts the PCM data into a frame at every 1152 samples, and encodes the PCM data so that the MP3 data is outputted at a fixed bit rate of 128 kbps (kilobit per second), for example. Thus, a theoretical size of a single frame is calculated by the following equation:

$$\text{Fsize} = (\text{Nsample} \times \text{Rbit} / 8)/\text{fs} \dots (1).$$

In the equation (1), Fsize is a theoretical size of a frame, Nsample is the number of samples, Rbit is a bit rate, and fs is a sampling frequency. In the equation (1), in order to express the frame size not in bit but by byte, the bit rate is divided by 8. Also, as mentioned above, the sampling frequency is 44.1 kHz. Therefore, the theoretical frame size is (1152 x (128000/8)) / 44100 ≈ 417.959 bytes. That is, if a frame of data size of 417.959 bytes is sequentially outputted from the MP3 encoder 50, the bit rate of the MP3 data becomes 128 kbps.

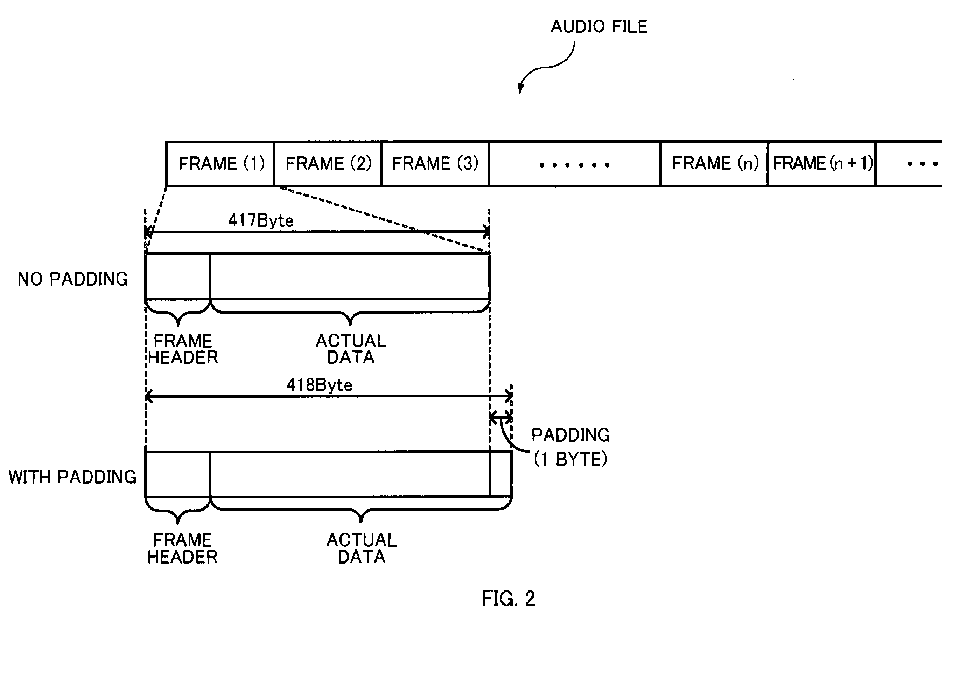

Since the minimum unit of data is 1 byte, the MP3 encoder 50 cannot actually encode the PCM data and generate the above frame with 417.959 bytes. Thus, the MP3 encoder 50 needs to generate a frame with 417 bytes (first data size) and a frame with 418 bytes (second data size) so that the bit rate of the MP3 data becomes 128 kbps. Specifically, in a case where 49 frames are generated, for example, the MP3 encoder 50 generates two 417-byte frames and forty-seven 418-byte frames. A ratio in this case is a ratio between 2 frames and 47 frames. In such a case, the total size of the 49 frames is 2 x 417 + 47 x 418 = 20480 bytes, and an average size per frame is 20480/49 ≈ 417. 959 bytes. Therefore, the average size of a single frame approximately matches the frame size calculated by the above equation (1). The MP3 encoder 50 according to an embodiment of the present invention adds 1-byte padding to a frame with 417 bytes, to generate a frame with 418 bytes, as shown in Fig. 2. Also, each frame includes: a frame header including synchronous data (beginning data) indicating the beginning of the frame, information about presence/absence of padding, a bit rate, and the like; and actual data obtained by encoding the PCM data.

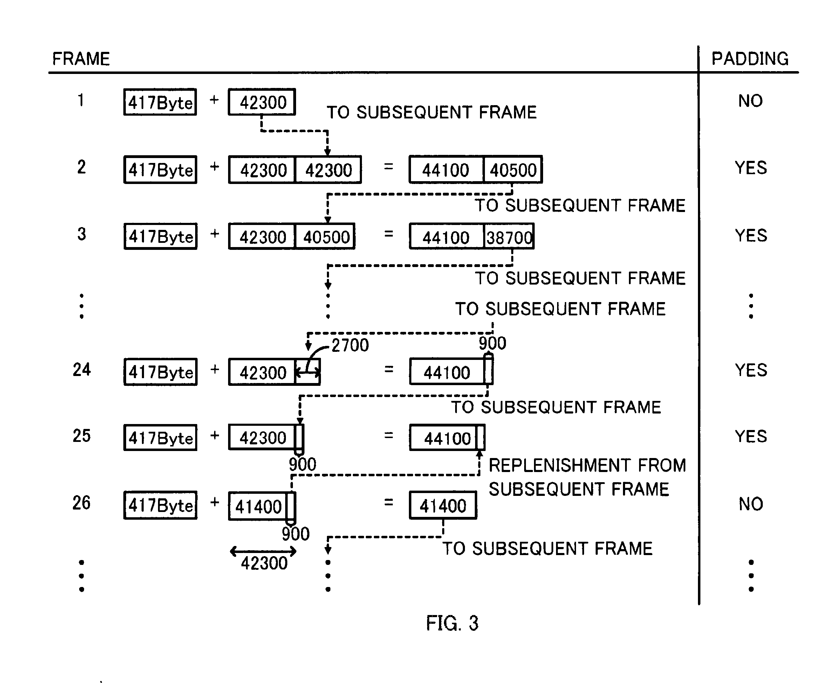

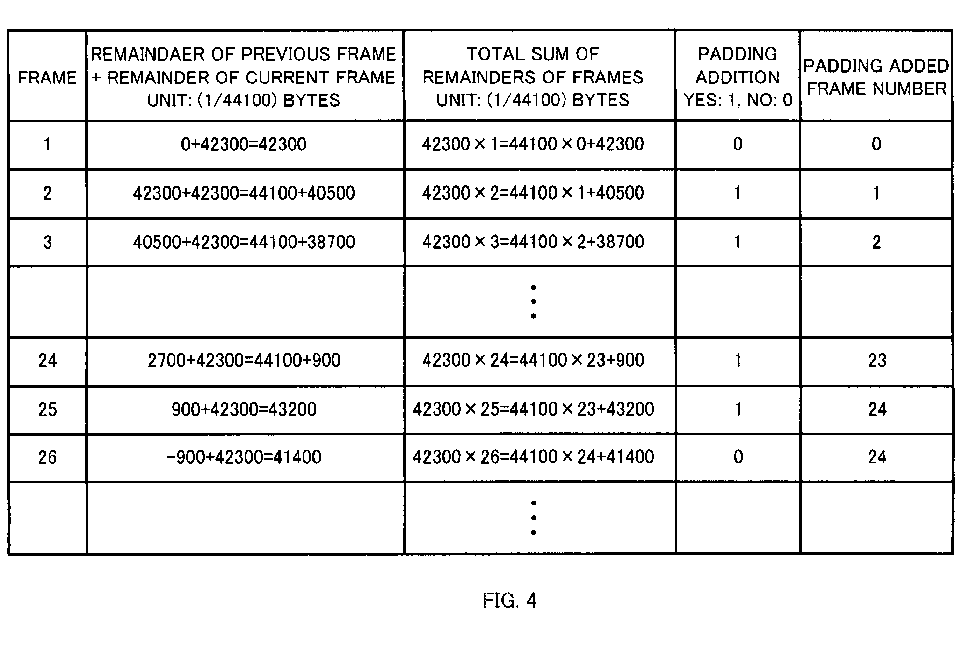

Here, there will be described a frame generated when the MP3 encoder 50 outputs the MP3 data at a bit rate of 128 kbps with reference to Figs. 3 and 4. In a following embodiment of the present invention, there will be described, as an example, a case where a LAME encoder is employed as the MP3 encoder 50. Also, when the MP3 encoder 50 generates the frame of 417 bytes, a remainder of "42300 (1/44100 (bytes))" (42300/44100 ≈ 0.959) is generated from the equation (1). If the number of bytes of the remainder when the frame is generated exceeds the above "42300", for example, the MP3 encoder 50 adds padding, to generate a frame of 418 bytes. Hereinafter, it is assumed that the unit of the number of bytes of the remainder is "1/44100 (bytes)" unless described otherwise, and "42300" is a threshold value.

First, the number of bytes of the remainder when the MP3 encoder 50 generates the first frame is "42300", and does not exceed the threshold value of "42300". Thus, the MP3 encoder 50 generates a frame of 417 bytes. The number of bytes of the remainder when the MP3 encoder 50 generates the second frame is the total of "42300" and "42300" that is the remainder when the above first frame is generated. Thus, the number of bytes of the remainder when the second frame is generated is "42300" + "42300", which exceeds the threshold value. Therefore, the MP3 encoder 50 generates a frame with 418 bytes, and also generates a new remainder of "42300" + "42300" - "44100" = "40500". As such, a frame to which padding is added is generated as the second frame. The number of bytes of the remainder when the MP3 encoder 50 generates the third frame is the total of "42300" and "40500" that is the remainder when the above-mentioned second frame is generated. Therefore, the MP3 encoder 50 generates a frame to which padding is added as the third frame similarly to the second frame. In the following, the MP3 encoder 50 generates a frame of 418 bytes by adding padding if the number of bytes of the remainder exceeds the threshold value, and the MP3 encoder 50 generates a frame of 417 bytes if the number of bytes of the remainder is less than or equal to the threshold value, similarly to the first to third frames. Thus, though not shown here, padding is to be added to the fourth to 23rd frames similarly to the third frame. In an embodiment of the present invention, as in a case of the 25th frame, for example, in a case where the number of bytes of the remainder is "43200" and exceeds the threshold value but the value is smaller than "44100" that is a value of a denominator in the equation (1), the MP3 encoder 50 supplies such a value that a frame becomes "44100" from the number of bytes of the remainder in the subsequent frame. Thus, as shown in Figs. 3 and 4, a frame to which padding is added is generated as a 25th frame, and a frame without padding is generated as a 26th frame.

Also, the MP3 encoder 50 according to an embodiment of the present invention sequentially stores the MP3 data from the beginning of the predetermined storage region that is ensured in the SDRAM 42. Thus, in an embodiment of the present invention, a frame generated the earliest in time is stored at the beginning of the predetermined storage region. Moreover, the MP3 encoder stores the MP3 data in the predetermined storage region cyclically. That is, the region in which the MP3 data is stored is managed as a ring buffer, and if the MP3 data is continuously generated without being transferred to the USB device 31, the MP3 data is sequentially overwritten from data that is older in terms of time. Also, if the size of the storage region in which the MP3 data is stored in the SDRAM 42 is 64 M bits and the bit rate of the MP3 data is 128 kbps, for example, the MP3 data approximately for the past 8 minutes can be accumulated in the SDRAM 42.

The CPU 52 realizes various functional blocks by executing programs stored in the incorporated memory such as a ROM (Read Only Memory), RAM and the like, not shown. The CPU 52 will be described later in detail.

The transfer circuit 54 reads the MP3 data stored in the SDRAM 42, to be outputted to the USB microcomputer 43 based on information such as a transfer address of the MP3 data inputted from the host microcomputer 45. The MP3 data outputted to the USB microcomputer 43 is transferred to the USB device 31. Also, the transfer circuit 54 stores information such as the transfer address in a register (not shown) inside thereof.

<First Embodiment of CPU 52>

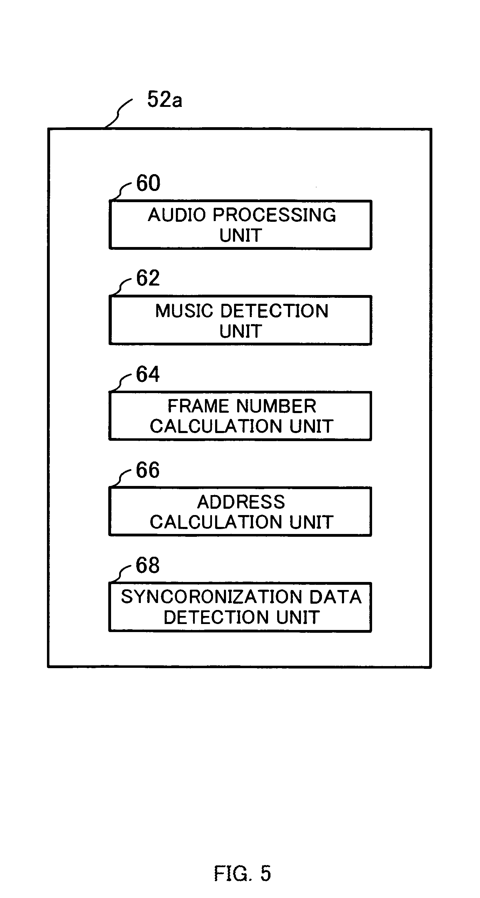

The CPU 52 will be described in detail with reference to Fig. 5. A CPU 52a is a first embodiment of the CPU 52, and executes programs stored in the ROM or the like (not shown), to realize an audio processing unit 60, a music detection unit 62, a frame number calculation unit 64, an address calculation unit 66, and a synchronous data detection unit 68.

The audio processing unit 60 performs various types of processing for the inputted PCM data, to be outputted to the DAC 44 based on an instruction from the host microcomputer 45. Specifically, the audio processing unit 60 performs, for the PCM data, such processing as to accentuate lower audio frequencies of the inputted sound, for example.

The music detection unit 62 detects whether an audio signal inputted to the music reproducing device 40 is a signal indicating music or not. Moreover, the music detection unit 62 stores a number of a frame where the music is started (hereinafter referred to as a start frame) and a number of a frame where the music ends (hereinafter referred to as an end frame), in the frames encoded by the MP3 encoder 50, based on a detection result. Specifically, the music detection unit 62 detects, based on the PCM data, that the audio signal is a signal indicating music in a case where an audio signal of a predetermined frequency band is included in an inputted sound signal, for example. Also, the music detection unit 62 includes a counter (not shown) for counting the number of frames that is sequentially outputted from the MP3 encoder 50, for example, and calculates the start frame and the end frame based on the count value and the above detection result. In a case where a period corresponding to 100 counts is required for the music detection unit 62 to detect whether the inputted audio signal is a signal indicating music or not, for example, the music detection unit 62 sets, as the start frame, a frame with such a count value that is 100 counts before a count value when detecting the inputted sound signal is music. Similarly, the music detection unit 62 sets, as the end frame, a frame with such a count value that is 100 counts before a count value when detecting that the music has ended.

The frame number calculation unit 64 calculates the number of frames with padding, which are between the start frame and the end frame, in the frames stored in the beginning region of the storage region of the SDRAM 42 (hereinafter referred to as the beginning frame). As mentioned above, the MP3 encoder 50 generates a frame to which padding is added if the number of bytes of the remainder exceeds the threshold value. Therefore, the theoretical number of frames with padding when n frames are generated can be expressed by an integer value of a value of a quotient of a following equation:

$$np = (n \times Rem - (Nth + 1)/fs +1 \ldots (2).$$

In the equation (2), np is the number of frames to which padding is added, and n is the number of frames, that is, the number of frames from the first frame (beginning frame) to the n-th frame. Rem is "42300", which is a remainder of the equation (1), Nth is the threshold value of "42300", and fs is the above sampling frequency of "44100". If the equation (2) is deformed, to be expressed as an equation (3):

$$np = n \times (Rem/fs) + (fs - (Nth + 1))/fs \ldots (3).$$

As obvious from the equation (3), the frame number np with padding is determined based on a predetermined rate Rem/fs (=42300/44100 ≈ 0.959).

In a case where the MP3 encoder 50 generates a frame based on a general standard of LAME, the first frame is generated as a frame without padding. However, even if the MP3 encoder 50 is based on the LAME standard, there can be a case where the MP3 encoder 50 is set such that a frame with padding is generated as the first frame, for example. In such a case, the MP3 encoder 50 generates a frame with padding as the first frame. As a result, the number of frames with padding, which are included in the first to n-th frames, might be deviated by "1" between the case where padding is added to the first frame and the case where padding is not added to the first frame.

The number np1 of frames, which is obtained by calculation using the equation (3), is a theoretical value obtained by calculating without consideration of presence/absence of padding in the first frame. Thus, considering presence/absence of padding in the first frame, the result of the equation (3) may be used if the first frame does not includes padding, and a value obtained by adding "1" to the result of the equation (3) may be used if the first frame includes padding.

However, even if presence/absence of padding in the first frame is not considered, the equation (3) is a theoretical calculation equation based on characteristics such as a bit rate of the MP3 encoder 50 as mentioned above. Therefore, if a case where the equation (3) is used is compared with a case where an approximate calculation is performed from the result in Fig. 4, or the like, for example, specifically, a case where a predetermined rate is set at 24/26 (≈ 0.923) assuming that padding is included in 24 frames out of 26 frames from the first frame to the 26th frame, the number of frames with padding can be calculated with accuracy.

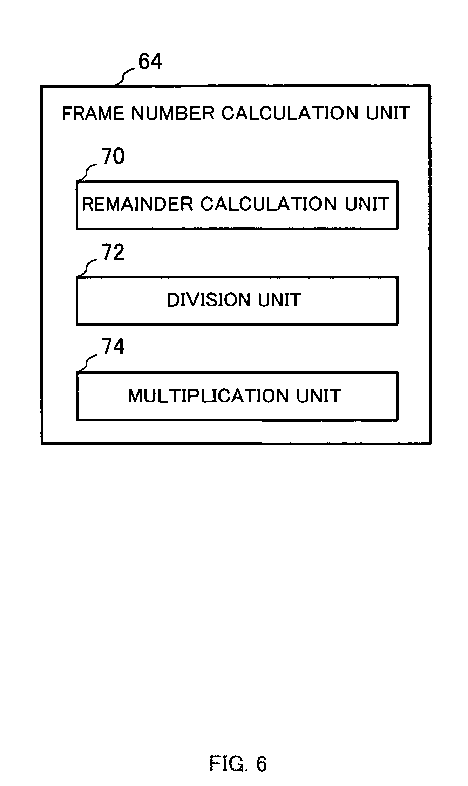

The frame number calculation unit 64 according to an embodiment of the present invention includes a remainder calculation unit 70, a division unit 72, and a multiplication unit 74 as shown in Fig. 6, for example, so as to realize the above equation (3).

The remainder calculation unit 70 calculates a remainder of the above equation (1), that is, Rem in the equation (2). Rem according to an embodiment of the present invention is "42300", as mentioned above.

The division unit 72 calculates Rem/fs (= 42300/44100), which is a predetermined rate in the equation (3) based on Rem, which is a calculation result of the remainder calculation unit 70, and the sampling frequency fs.

The multiplication unit 74 calculates the number np1 of frames with padding in the number n1 of frames that are included between the beginning frame and the start frame, and the number np2 of frames with padding in the number n2 of frames that are included between the beginning frame and the end frame. Specifically, the multiplication unit 74 multiplies each of n1 and n2 by the predetermined rate Rem/fs calculated in the division unit 72, to execute the equation (3).

A rate calculation unit calculates a generation rate of the frames with padding in the frames with padding and the frames without padding, based on the sampling frequency, the predetermined sample number, and the predetermined bit rate. The rate calculation unit includes the remainder calculation unit 70 and the division unit 72.

The address calculation unit 66 calculates a beginning address of the start frame (hereinafter referred to as a start address) and a beginning address of the end frame (hereinafter referred to as an end address) in the SDRAM 42. Here, the beginning address means an address at which the synchronous data of the frame is stored. The address calculation unit 66 calculates the start address using an equation (4) based on a beginning address of the beginning frame, the number n1 of frames, the number np1 of frames with padding, a size of an actual frame without padding, and a size of an actual frame with padding.

$$Add1 = Add + Fz \times n1 + (Fzp - Fz) \times np1 \ldots (4)$$

In the equation (4), Add1 is the start address, Add is the beginning address of the beginning frame, Fz is a size of an actual frame without padding, and Fzp is a size of an actual frame with padding. As mentioned above, since the beginning frame is stored at the beginning of the predetermined storage region of the SDRAM 42, the beginning address of the beginning frame is an address allocated to the beginning of the predetermined storage region of the SDRAM 42.

Also, in an embodiment of the present invention, since Fz has 417 bytes and Fzp has 418 bytes, the equation (4) can be expressed as follows:

$$\text{Add1} = \text{Add} + 417 \times \text{n1} + \text{np1} \ \dots \ (5).$$

The address calculation unit 66 also calculates the end address by an equation (6) similarly to the equation (4). In the equation (6), Add2 is the end address.

$$\text{Add2} = \text{Add} + \text{Fz} \times \text{n1} + (\text{Fzp} - \text{Fz}) \times \text{np2} \ \dots \ (6)$$

Also, the equation (6) can be expressed by an equation (7) similarly to the equation (5):

$$\text{Add2} = \text{Add} + 417 \times \text{n1} + \text{np2} \ \dots \ (7).$$

As mentioned above, since the numbers np1 and np2 of frames with padding are theoretical calculation values, they might be deviated from an actual value only by 1 frame, for example. As a result, the start address and the end address calculated by the address calculation unit 66 might be deviated from the actual start address and end address by 1 byte, for example. In an embodiment according to the present invention, in order to correct the difference of the calculated addresses, processing of detecting synchronous data of each of the start frame and the end frame is executed based on the calculated addresses.

The synchronous data detection unit 68 detects synchronous data of the start frame from the start address calculated by the address calculation unit 66. Then, if the address of the detected synchronous data is deviated from the calculated start address, the address of the detected synchronous data is transmitted to the host microcomputer 45 as the start address. If the address of the detected synchronous data matches the calculated start address, the calculated start address is transmitted to the host microcomputer 45. The synchronous data detection unit 68 also executes for the end address processing, which is similar to that for the start address, to transmit the end address to the host microcomputer 45.

<Operation of music reproducing device 10 using CPU 52a>

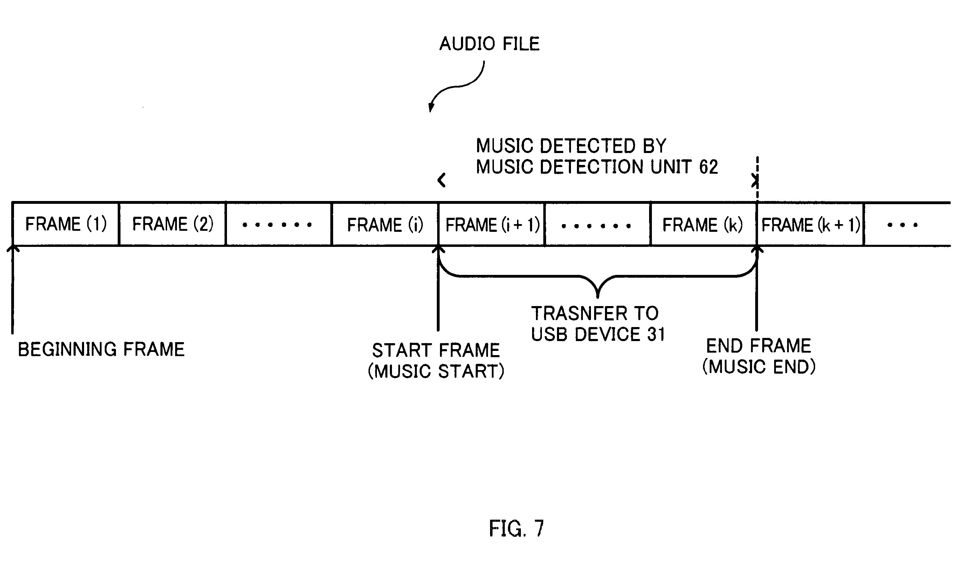

Here, there will be described an example of an operation when the music reproducing device 10 using the CPU 52a transfers music stored in the SDRAM 42 to the USB device 31. It is assumed that, in the SDRAM 42, as shown in Fig. 7, such a music file that music starts in the (i + 1)th frame and the music ends in the (k + 1)th frame is stored.

First, the frame number calculation unit 64 calculates the number np1 of frames to which padding is added, in frames from the beginning frame to the (i + 1)th start frame, that is, in i pieces of frames, using the equation (3) (S100). Subsequently, the address calculation unit 66 calculates the stat address Add1 of the start frame using the calculated number np1 of frames in the equation (5) (S101). Specifically, the start address is Add1 = Add + 417 xi + np1. Then, the synchronous data detection unit 68 detects synchronous data of the start frame based on the calculated start address (S102). As mentioned above, since the number np1 of frames is calculated based on the characteristics of the MP3 encoder 50, it substantially matches the actual number of frames with padding. Therefore, even if the start address calculated by the address calculation unit 66 is deviated, the synchronous data detection unit 68 can easily detect the start address of the accurate start frame. Then, the synchronous data detection unit transmits the start address of the specified start frame to the host microcomputer 45 (S103).

Also, the frame number calculation unit 64 executes processing similar to the above processing S100 to S103 to calculate the end address of the end frame. Specifically, the number np2 of frames, to which padding is added, in k pieces of frames is calculated using the equation (3) (S104). Then, the address calculation unit 66 calculates the end address Add2 of the end frame using the equation (7) (S105). Then, the synchronous data detection unit 68 detects the synchronous data of the end frame based on the calculated end address (S106), and transmits the specified end address to the host microcomputer 45 (S107).

The host microcomputer 45 transmits to the USB microcomputer 43 the start address and the end address transmitted from the synchronous data detection unit 68. Then, the USB microcomputer 43 transfers to the USB device 31 music data from the start frame to the end frame in the SDRAM 42 based on the transmitted start and end addresses (S108). As a result, the music reproducing device 10 can extract only music from sound outputted from the tuner 20, to be stored in the USB device 31, for example.

<Second Embodiment of CPU 52>

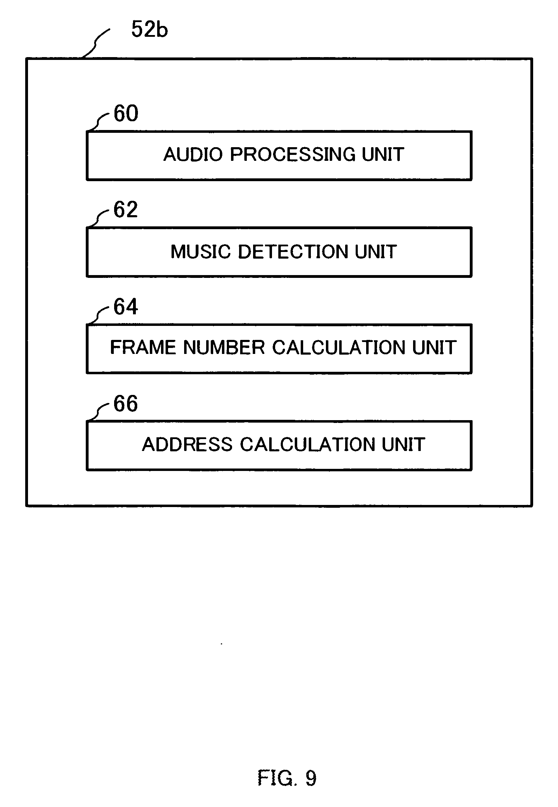

A CPU 52b shown in Fig. 9 is a second embodiment of the CPU 52, and executes programs stored in the ROM or the like (not shown) to realize the audio processing unit 60, the music detection unit 62, the frame number calculation unit 64, and the address calculation unit 66 except the synchronous data detection unit 67 of the CPU 52a. Here, it is assumed that the MP3 encoder 50 when the CPU 52b is used is an encoder that generates a frame without padding first based on the LAME standard. That is, the MP3 encoder 50 sequentially generates frames in a pattern as shown in Figs. 3 and 4 based on the LAME standard. If the first frame is a frame without padding as mentioned above, for example, the frames with padding in the first frame to the n-th frame can be accurately calculated using the equation (3).

If padding is added to the frame that is generated first, the frame number calculation unit 64 can accurately calculate the number of frames with padding by adding only "1" to the calculation result of the equation (3). That is, based on information on whether or not padding is added to the frame that is generated first, the frame number calculation unit 64 selects either using the calculation result of the equation (3) or using a value obtained by adding "1" to the calculation result of the equation (3), to be able to accurately calculate the number of frames with padding.

<Operation of music reproducing device 10 using CPU 52b>

Here, there will be described an example of an operation when the music reproducing device 10 which uses the CPU 52b transfers music stored in the SDRAM 42 to the USB device 31. It is assumed that, in the SDRAM 42, such a music file that music starts in the (i + 1)th frame and the music ends in the (k + 1)th frame is stored, as shown in Fig. 7.

First, the frame number calculation unit 64 calculates the number of frames from the beginning frame to the (i + 1)th start frame using the equation (3) (S200). Subsequently, the address calculation unit 66 calculates the start address Add1 of the start frame by using the calculated number np1 of frames in the equation (5) (S201). As mentioned above, the MP3 encoder 50 generates frames with padding and frames without padding according to the predetermined pattern. Thus, the number np1 of frames matches the actual number of frames with padding. Then, the synchronous data detection unit transmits the start address of the specified start frame to the host microcomputer 45 (S202).

Also, the frame number calculation unit 64 executes processing similar to the above processing S200 to S201 so as to calculate the end address of the end frame. Specifically, the number np2 of frames, to which padding is added, in k pieces of frames is calculated using the equation (3) (S203). Then, the address calculation unit 66 calculates the end address Add2 of the end frame by using the equation (7) (S204). Then, the end address is transmitted to the host microcomputer 45 (S205).

Also, the host microcomputer 45 transmits to the USB microcomputer 43 the start address and the end address transmitted from the synchronous data detection unit 68. The USB microcomputer 43 transfers to the USB device 31 music data from the start frame to the end frame of the SDRAM 42 based on the transmitted start and end addresses (S206). As a result, the music reproducing device 10 can extract only music from sound outputted from the tuner 20, to be stored in the USB device 31, for example.

As mentioned above, if the CPU 52b is used in a case where a pattern of frames to be generated is predetermined, an address of data to be obtained can be accurately calculated. Therefore, as compared with the above case where the CPU 52a is used, for example, detection of synchronous data is not needed, and thus, processing to be executed can be reduced.

As mentioned above, the audio LSI 41 calculates the number of frames with padding in frames from the beginning frame to the desired frame stored in the SDRAM 42. Moreover, the audio LSI 41 calculates the beginning address of the desired frame based on the calculated number of frames with padding. Therefore, the audio LSI 41 can acquire the desired beginning address with accuracy, as compared with a case where the desired beginning address is calculated by multiplying a data size of a frame without padding by the number of frames from the beginning frame to the desired frame, for example. Moreover, in an embodiment of the present invention, when a desired frame is selected, there is no need to separately store information of the beginning address of each of the frames from the beginning frame to the desired frame in a memory such as the SDRAM 42, for example. Thus, a memory capacity of the SDRAM 42 or the like is reduced.

Also, the beginning address of the desired frame can be calculated based on the beginning address of the beginning frame, a frame size without padding and a frame size with padding, the number of frames with padding, and the number of frames from the beginning frame to the desired frame.

Also, the frame number calculation unit 64 calculates the number of frames with padding in a plurality of frames from the first frame based on the equation (3). Since the equation (3) is a theoretical equation based on the characteristics of the MP3 encoder 50, the number of frames with padding calculated by the equation (3) substantially matches the actual number of frames with padding. Thus, in an embodiment of the present invention, the number of frames with padding in a plurality of frames can be calculated with accuracy.

Also, in an embodiment of the present invention, the number of frames with padding in the number of a plurality of frames is calculated by multiplying the number of the plurality of frames by a predetermined ratio. The predetermined ratio is, as shown in the equations (1) and (3), for example, calculated based on the sampling frequency of the ADC 40, the sample number of the PCM data included in a single frame, and the bit rate of the MP3 data. Thus, even if the sampling frequency, the bit rate and the like are changed, for example, the number of frames with padding in the number of a plurality of frames can be calculated.

Also, in an embodiment of the present invention, the rate when calculating the number of frames with padding in the number of a plurality of frames is calculated based on a value obtained by dividing Rem, which is a remainder of the equation (1), by the sampling frequency fs.

Also, in an embodiment of the present invention, as shown in equation (5), for example, the beginning address of the desired frame can be calculated without using the number of frames without padding in a plurality of frames. Therefore, in an embodiment of the present invention, there is no need to calculate the number of frames without padding in a plurality of frames, and thus, processing of the CPU 52 can be reduced.

The above embodiments of the present invention are simply for facilitating the understanding of the present invention and are not in any way to be construed as limiting the present invention.

The MP3 encoder 50 according to an embodiment of the present invention generates a frame based on the LAME standard, for example, but this is not limitative.

## Claims

1. A digital data processing apparatus comprising:

   an encoding unit (50) configured to encode inputted digital audio data to generate encoded data with a predetermined bit rate, as well as to allow the encoded data to be sequentially stored in a memory (42), the encoded data consisting of frames of first data size (Fz) and second data size (Fzp) that is greater than the first data size;
   a frame number calculation unit (64) configured to calculate at least either one of the number of frames of the first data size and the number of frames of the second data size, out of the frames, the number of which is n, stored in the memory (42); and
   an address calculation unit (66) configured to calculate a second address (Add2) of the memory (42) based on a first address (Add) of the memory, the first and second data sizes, a calculation result of the frame number calculation unit (64), and the number n of the frames, the second address (Add2) having beginning data stored therein of a frame that is stored in the memory (42) subsequently to the n frames, the first address (Add) having beginning data stored therein indicating beginning of a frame that is stored in the memory (42) the earliest in time among the n frames.

2. The digital data processing apparatus according to claim 1, wherein
   the address calculation unit (66) configured to
   calculate the second address (Add2) based on the first address (Add), the first and second data sizes, and the calculation result of the frame number calculation unit (64), in a case where the frame number calculation unit (64) calculates both of the number of the frames of the first data size and the number of the frames of the second data size, and
   calculate the second address (Add2) based on the first address (Add), the first and second data sizes, the calculation result of the frame number calculation unit (64), and the number n of the frames, in a case where the frame number calculation unit (64) calculates either one of the number of the frames of the first data size and the number of the frames of the second data size.

3. The digital data processing apparatus according to claim 2, wherein
   the digital audio data is data that is inputted to the encoding unit (50) in every predetermined sampling period, wherein
   the frame is generated based on the digital audio data of a predetermined sample number (Nsample), wherein
   the encoding unit (50) generates the frames of the first and second data sizes at a ratio determined based on the sampling frequency (fs), the predetermined sample number (Nsample), and the predetermined bit rate (Rbit) so that a bit rate of the encoded data becomes the predetermined bit rate, and wherein

the frame number calculation unit (64) calculates, based on the ratio, at least either one of the number of the frames of the first data size and the number of the frames of the second data size in the n frames.

4. The digital data processing apparatus according to claim 3, wherein
the frame number calculation unit includes:

a rate calculation unit (70,72) configured to calculate a generation rate of the frames of the second data size in the frames of the first and second data sizes, based on the sampling frequency, the predetermined sample number, and the predetermined bit rate; and
a multiplication unit (74) configured to calculate the number of frames of the second data size in the n frames, by multiplying the number n of the frames by the rate.

5. The digital data processing apparatus according to claim 4, wherein
the rate calculation unit includes:

a remainder calculation unit (70) configured to calculate a remainder when a product of the predetermined sample number and the predetermined bit rate is divided by the sampling cycle; and
a division unit (72) configured to calculate the rate based on a division result obtained by dividing the remainder by the sampling cycle.

6. The digital data processing apparatus according to claim 4, wherein
the address calculation unit (66) calculates the second address by adding: a product of a difference between the first and second data sizes and the number of the frames of the second data size; and a product of the first data size and the number n of the frames, to the first address.

7. The digital data processing apparatus according to claim 5, wherein
the address calculation unit calculates (66) the second address by adding: a product of a difference between the first and second data sizes and the number of the frames of the second data size; and a product of the first data size and the number n of the frames, to the first address.

**Patentansprüche**

1. Digitaldaten-Verarbeitungsvorrichtung, die umfasst:

eine Codierungseinheit (50), die dazu konfiguriert ist, die eingegebenen digitalen Audiodaten zu codieren um codierte Daten mit einer vorgegebenen Bitrate zu erzeugen, sowie dazu, es zu ermöglichen, dass die codierten Daten sequentiell in einem Speicher (42) gespeichert werden, wobei die codierten Daten aus Rahmen mit einer ersten Datengröße (Fz) und mit einer zweiten Datengröße (Fzp), die größer als die erste Datengröße ist, bestehen;
eine Rahmenanzahl-Berechnungseinheit (64), die dafür konfiguriert ist, die Anzahl der Rahmen mit der ersten Datengröße und/oder die Anzahl der Rahmen mit der zweiten Datengröße von den Rahmen, deren Anzahl n ist, die in dem Speicher (42) gespeichert sind, zu berechnen; und
eine Adressenberechnungseinheit (66), die zum Berechnen einer zweiten Adresse (Add2) des Speichers (42) auf der Grundlage einer ersten Adresse (Add) des Speichers, der ersten und der zweiten Datengröße, eines Rechenergebnisses der Rahmenanzahl-Berechnungseinheit (64) und der Anzahl n der Rahmen konfiguriert ist, wobei bei der zweiten Adresse (Add2) Anfangsdaten eines Rahmens gespeichert sind, der in dem Speicher (42) nach den n Rahmen gespeichert ist,
wobei bei der ersten Adresse (Add) Anfangsdaten gespeichert sind, die den Anfang eines Rahmens angeben, der in dem Speicher (42) als zeitlich frühester unter den n Rahmen gespeichert ist.

2. Digitaldaten-Verarbeitungsvorrichtung nach Anspruch 1, bei der die Adressenberechnungseinheit (66) konfiguriert ist zum:

Berechnen der zweiten Adresse (Add2) auf der Grundlage der ersten Adresse (Add), der ersten und der zweiten Datengröße und des Rechenergebnisses der Rahmenanzahl-Berechnungseinheit (64), falls die Rahmenanzahl-Berechnungseinheit (64) sowohl die Anzahl der Rahmen mit der ersten Datengröße als auch die Anzahl der Rahmen mit der zweiten Datengröße berechnet, und

Berechnen der zweiten Adresse (Add2) auf der Grundlage der ersten Adresse (Add), der ersten und der zweiten Datengröße, des Rechenergebnisses der Rahmenanzahl-Berechnungseinheit (64) und der Anzahl n der Rahmen, falls die Rahmenanzahl-Berechnungseinheit (64) die Anzahl der Rahmen mit der ersten Datengröße oder die Anzahl der Rahmen mit der zweiten Datengröße berechnet.

3. Digitaldaten-Verarbeitungsvorrichtung nach Anspruch 2, bei der:

die digitalen Audiodaten Daten sind, die in jeder vorgegebenen Abtastperiode in die Codierungseinheit (50) eingegeben werden, wobei der Rahmen auf der Grundlage der digitalen Audiodaten mit einer vorgegebenen Abtastungszahl (Nsample) erzeugt wird, wobei

die Codierungseinheit (50) die Rahmen mit der ersten und mit der zweiten Datengröße mit einem Verhältnis erzeugt, das auf der Grundlage der Abtastfrequenz (fs), der vorgegebenen Abtastungszahl (Nsample) und der vorgegebenen Bitrate (Rbit) bestimmt wird, sodass eine Bitrate der codierten Daten zu der vorgegebenen Bitrate wird, und wobei

die Rahmenanzahl-Berechnungseinheit (64) auf der Grundlage des Verhältnisses die Anzahl der Rahmen mit der ersten Datengröße und/oder die Anzahl der Rahmen mit der zweiten Datengröße in den n Rahmen berechnet.

4. Digitaldaten-Verarbeitungsvorrichtung nach Anspruch 3, bei der die Rahmenanzahl-Berechnungseinheit enthält:

eine Ratenberechnungseinheit (70, 72), die zum Berechnen einer Erzeugungsrate der Rahmen mit der zweiten Datengröße in den Rahmen mit der ersten und mit der zweiten Datengröße auf der Grundlage der Abtastfrequenz, der vorgegebenen Abtastungsanzahl und der vorgegebenen Bitrate konfiguriert ist; und

eine Multiplikationseinheit (74), die zum Berechnen der Anzahl der Rahmen mit der zweiten Datengröße in den n Rahmen durch Multiplizieren der Anzahl n der Rahmen mit der Rate konfiguriert ist.

5. Digitaldaten-Verarbeitungsvorrichtung nach Anspruch 4, bei der die Ratenberechnungseinheit enthält:

eine Restberechnungseinheit (70), die zum Berechnen eines Rests, wenn ein Produkt mit der vorgegebenen Abtastungsanzahl und mit der vorgegebenen Bitrate durch den Abtastzyklus dividiert wird, konfiguriert ist; und

eine Divisionseinheit (72), die zum Berechnen der Rate auf der Grundlage eines durch Dividieren des Rests durch den Abtastzyklus erhaltenen Divisionsergebnisses konfiguriert ist.

6. Digitaldaten-Verarbeitungsvorrichtung nach Anspruch 4, bei der:

die Adressenberechnungseinheit (66) die zweite Adresse durch Addieren: eines Produkts einer Differenz zwischen der ersten und der zweiten Datengröße und der Anzahl der Rahmen mit der zweiten Datengröße; und eines Produkts der ersten Datengröße und der Anzahl n der Rahmen, zu der ersten Adresse berechnet.

7. Digitaldaten-Verarbeitungsvorrichtung nach Anspruch 5, bei der:

die Adressenberechnungseinheit (66) die zweite Adresse durch Addieren: eines Produkts einer Differenz zwischen der ersten und der zweiten Datengröße und der Anzahl der Rahmen mit der zweiten Datengröße; und eines Produkts der ersten Datengröße und der Anzahl n der Rahmen, zu der ersten Adresse berechnet.

**Revendications**

1. Appareil de traitement de données numériques comprenant :

une unité de codage (50) configurée pour coder des données audio numériques entrées afin de générer des données codées avec un débit binaire prédéterminé et afin de permettre aux données codées d'être séquentiellement stockées dans une mémoire (42), les données codées se composant de trames d'une première taille de données (Fz) et d'une deuxième taille de données (Fzp) supérieure à la première taille de données ;

une unité de calcul de nombre de trames (64) configurée pour calculer au moins l'un du nombre de trames de la première taille de données et du nombre de trames de la deuxième taille de données, parmi les trames, dont le nombre est n, stockées dans la mémoire (42) ; et

une unité de calcul d'adresse (66) configurée pour calculer une deuxième adresse (Add2) de la mémoire (42) sur la base d'une première adresse (Add) de la mémoire, des première et deuxième tailles de données, d'un résultat de calcul de l'unité de calcul de nombre de trames (64), et du nombre n de trames, la deuxième adresse (Add2) stockant des données de début d'une trame qui est stockée dans la mémoire (42) après les n trames, la première adresse (Add) stockant des données de début indiquant le début d'une trame qui est stockée dans la mémoire (42) en premier dans le temps parmi les n trames.

2. Appareil de traitement de données numériques selon la revendication 1, dans lequel
l'unité de calcul d'adresse (66) est configurée pour :

calculer la deuxième adresse (Add2) sur la base de la première adresse (Add), des première et deuxième tailles de données, et du résultat de calcul de l'unité de calcul de nombre de trames (64), dans le cas où l'unité de calcul de nombre de trames (64) calcule le nombre de trames de la première taille de données et le nombre de trames de la deuxième taille de données, et
calculer la deuxième adresse (Add2) sur la base de la première adresse (Add), des première et deuxième tailles de données, du résultat de calcul de l'unité de calcul de nombre de trames (64), et du nombre n de trames, dans le cas où l'unité de calcul de nombre de trames (64) calcule l'un du nombre de trames de la première taille de données et du nombre de trames de la deuxième taille de données.

3. Appareil de traitement de données numériques selon la revendication 2, dans lequel
les données audio numériques sont des données qui sont entrées dans l'unité de codage (50) à chaque période d'échantillonnage prédéterminée, dans lequel
la trame est générée sur la base des données audio numériques d'un nombre d'échantillons prédéterminé (Nsample), dans lequel
l'unité de codage (50) génère les trames des première et deuxième tailles de données à un rapport déterminé sur la base de la fréquence d'échantillonnage (fs), du nombre d'échantillons prédéterminé (Nsample), et du débit binaire prédéterminé (Rbit) de sorte qu'un débit binaire des données codées devienne le débit binaire prédéterminé, et dans lequel
l'unité de calcul de nombre de trames (64) calcule, sur la base du rapport, au moins l'un du nombre de trames de la première taille de données et du nombre de trames de la deuxième taille de données parmi les n trames.

4. Appareil de traitement de données numériques selon la revendication 3, dans lequel
l'unité de calcul de nombre de trames comprend :

une unité de calcul de taux (70, 72) configurée pour calculer un taux de génération des trames de la deuxième taille de données parmi les trames des première et deuxième tailles de données, sur la base de la fréquence d'échantillonnage, du nombre d'échantillons prédéterminé et du dédit binaire prédéterminé ; et
une unité de multiplication (74) configurée pour calculer le nombre de trames de la deuxième taille de données dans les n trames, en multipliant le nombre n des trames par le taux.

5. Appareil de traitement de données numériques selon la revendication 4, dans lequel
l'unité de calcul de taux comprend :

une unité de calcul de reste (70) configurée pour calculer un reste lorsqu'un produit du nombre d'échantillons prédéterminé et du débit binaire prédéterminé est divisé par le cycle d'échantillonnage ; et
une unité de division (72) configurée pour calculer le taux sur la base d'un résultat de division obtenu en divisant le reste par le cycle d'échantillonnage.

6. Appareil de traitement de données numériques selon la revendication 4, dans lequel
l'unité de calcul d'adresse (66) calcule la deuxième adresse en ajoutant : un produit d'une différence entre les première et deuxième tailles de données et le nombre de trames de la deuxième taille de données ; et un produit de la première taille de données et du nombre n de trames, à la première adresse.

7. Appareil de traitement de données numériques selon la revendication 5, dans lequel
l'unité de calcul d'adresse calcule (66) la deuxième adresse en ajoutant : un produit d'une différence entre les première et deuxième tailles de données et le nombre de trames de la deuxième taille de données ; et un produit de la première taille de données et du nombre n de trames, à la première adresse.

FIG. 1

AUDIO FILE

| FRAME (1) | FRAME (2) | FRAME (3) | • • • • • • | FRAME (n) | FRAME (n + 1) | • • • |

417Byte

NO PADDING

FRAME HEADER

ACTUAL DATA

418Byte

PADDING (1 BYTE)

WITH PADDING

FRAME HEADER

ACTUAL DATA

FIG. 2

EP 2 256 734 B1

| FRAME | PADDING |
|---|---|

1    [417Byte] + [42300]    TO SUBSEQUENT FRAME      NO

2    [417Byte] + [42300 | 42300] = [44100 | 40500]      YES

                                         TO SUBSEQUENT FRAME

3    [417Byte] + [42300 | 40500] = [44100 | 38700]      YES

                                         TO SUBSEQUENT FRAME

                               TO SUBSEQUENT FRAME

            ⌐2700          900

24    [417Byte] + [42300 ◁] = [44100 | ]      YES

                                     TO SUBSEQUENT FRAME

25    [417Byte] + [42300 | ] = [44100 | ]      YES

           900                        REPLENISHMENT FROM
                                       SUBSEQUENT FRAME

26    [417Byte] + [41400 | ] = [41400]      NO

           900

       ←—42300—→             TO SUBSEQUENT FRAME

FIG. 3

EP 2 256 734 B1

| FRAME | REMAINDAER OF PREVIOUS FRAME + REMAINDER OF CURRENT FRAME UNIT: (1/44100) BYTES | TOTAL SUM OF REMAINDERS OF FRAMES UNIT: (1/44100) BYTES | PADDING ADDITION YES: 1, NO: 0 | PADDING ADDED FRAME NUMBER |
|---|---|---|---|---|
| 1 | 0+42300=42300 | 42300 × 1=44100 × 0+42300 | 0 | 0 |
| 2 | 42300+42300=44100+40500 | 42300 × 2=44100 × 1+40500 | 1 | 1 |
| 3 | 40500+42300=44100+38700 | 42300 × 3=44100 × 2+38700 | 1 | 2 |
| | | ⋮ | | |
| 24 | 2700+42300=44100+900 | 42300 × 24=44100 × 23+900 | 1 | 23 |
| 25 | 900+42300=43200 | 42300 × 25=44100 × 23+43200 | 1 | 24 |
| 26 | −900+42300=41400 | 42300 × 26=44100 × 24+41400 | 0 | 24 |
| | | ⋮ | | |

FIG. 4

EP 2 256 734 B1

52a

60

AUDIO PROCESSING
UNIT

62

MUSIC DETECTION
UNIT

64

FRAME NUMBER
CALCULATION UNIT

66

ADDRESS
CALCULATION UNIT

68

SYNCORONIZATION DATA
DETECTION UNIT

FIG. 5

**64**

**FRAME NUMBER CALCULATION UNIT**

**70**

REMAINDER CALCULATION UNIT

**72**

DIVISION UNIT

**74**

MULTIPLICATION UNIT

FIG. 6

AUDIO FILE

MUSIC DETECTED BY
MUSIC DETECTION UNIT 62

| FRAME (1) | FRAME (2) | • • • • • | FRAME (i) | FRAME (i + 1) | • • • • • | FRAME (k) | FRAME (k + 1) | • • • |

BEGINNING FRAME

START FRAME
(MUSIC START)

TRASNFER TO
USB DEVICE 31

END FRAME
(MUSIC END)

FIG. 7

EP 2 256 734 B1

FIG. 8

52b

```
┌─────────────────────────────────────────────────┐
│                                                  │
│    60                                            │
│   ┌──────────────────────────────────────────┐   │
│   │         AUDIO PROCESSING UNIT            │   │
│   └──────────────────────────────────────────┘   │
│                                                  │
│    62                                            │
│   ┌──────────────────────────────────────────┐   │
│   │         MUSIC DETECTION UNIT             │   │
│   └──────────────────────────────────────────┘   │
│                                                  │
│    64                                            │
│   ┌──────────────────────────────────────────┐   │
│   │     FRAME NUMBER CALCULATION UNIT        │   │
│   └──────────────────────────────────────────┘   │
│                                                  │
│    66                                            │
│   ┌──────────────────────────────────────────┐   │
│   │        ADDRESS CALCULATION UNIT          │   │
│   └──────────────────────────────────────────┘   │
│                                                  │
└─────────────────────────────────────────────────┘
```

FIG. 9

```
                    ┌──────────────┐
                    │    START     │
                    └──────────────┘
                           │
                           ▼                        S200
        ┌─────────────────────────────────────┐
        │  CALCULATE THE NUMBER OF            │
        │  FRAMES np1                         │
        └─────────────────────────────────────┘
                           │
                           ▼                        S201
        ┌─────────────────────────────────────┐
        │  CALCULATE START ADDRESS            │
        └─────────────────────────────────────┘
                           │
                           ▼                        S202
        ┌─────────────────────────────────────┐
        │  TRANSMIT START ADDRESS             │
        │  TO HOST MICROCOMPUTER 45           │
        └─────────────────────────────────────┘
                           │
                           ▼                        S203
        ┌─────────────────────────────────────┐
        │  CALCULATE THE NUMBER OF            │
        │  FRAMES np2                         │
        └─────────────────────────────────────┘
                           │
                           ▼                        S204
        ┌─────────────────────────────────────┐
        │  CALCULATE END ADDRESS              │
        └─────────────────────────────────────┘
                           │
                           ▼                        S205
        ┌─────────────────────────────────────┐
        │  TRANSMIT START ADDRESS             │
        │  TO HOST MICROCOMPUTER 45           │
        └─────────────────────────────────────┘
                           │
                           ▼                        S206
        ┌─────────────────────────────────────┐
        │  TRASNFER MUSIC DATA               │
        │  TO USB DEVICE 31                  │
        └─────────────────────────────────────┘
                           │
                           ▼
                    ┌──────────────┐
                    │     END      │
                    └──────────────┘
```

FIG. 10

100

AUDIO FILE

MUSIC
REPRODUCING
DEVICE

200

MEMORY

210

OPERATION
RESULT

MICROCOMPUTER

220

DECODER

FIG. 11

AUDIO FILE

CALCULATION
ADDRESS (A)

CALCULATION
ADDRESS (B)

SYNCHRONOUS DATA DETECTION

BEGINNING ADDRESS
OF FRAME (1)

| FRAME (1) | FRAME (2) | • • • | FRAME (n) | FRAME (n + 1) | FRAME (n + 2) | • • • |

SYNCHRONOUS
DATA OF
FRAME (n + 1)

SYNCHRONOUS
DATA OF
FRAME (n + 2)

FRAME WITHOUT PADDING

FRAME HEADER        ACTUAL DATA

FRAME WITH PADDING

PADDING

FRAME HEADER        ACTUAL DATA

FIG. 12

EP 2 256 734 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002041095 A
- WO 02086894 A